# EUROPEAN PATENT APPLICATION

(11) **EP 4 659 633 A1**
(43) Date of publication of application: **10.12.2025**
(21) Application number: 24179700.0
(22) Date of filing: 03.06.2024
(51) Int. Cl.: A47J 27/21, F24C 7/08, B64D 11/04

(54) **VICTUAL HEATING SYSTEM WITH VIBRATION SENSOR**

(71) Applicant: B/E Aerospace, Inc., Winston Salem, NC 27105 (US)
(72) Inventor: VAN OOSTROM, Pieter, Haalderen (NL)
(74) Representative: Dehns

(57) **Abstract**

A system (200) comprising: a device (220) for heating victuals, the device (220) comprising a support (222) for the victuals and a heater (224); a controller (240); and a vibration sensor (260) configured to detect vibrations, wherein the controller (240) is configured to compare vibrations detected by the vibration sensor (260) to a vibration threshold, and wherein the controller (240) is configured to lower the heater output in response to the vibrations detected by the vibration sensor (260) exceeding the vibration threshold, and, when required for further heating of the victuals, configured to raise the heater output in response to the vibrations detected by the vibration sensor (260) no longer exceeding the vibration threshold.

## Description

### TECHNICAL FIELD

The present disclosure relates to a system for heating victuals and a method for controlling a device for heating victuals.

### BACKGROUND

Aircraft can be equipped with heating devices for victuals. These include ovens and other victual heating devices such as coffee machines provided in the aircraft galley in order to heat food and/ or drink (victuals) for passengers. There is a need to avoid inflight smoke issues on aircraft. There is a relation between inflight smoke issues and spillage of food or drink within the heating device inflight. The likelihood of spillage is increased while operating the heating device during certain phases of flight where the aircraft may be subject to higher vibrations, such as take-off, turbulence, and taxiing. Consequently, there is a need to reduce smoke issues related to such vibrations.

### SUMMARY

According to a first aspect of the disclosure, there is provided a system comprising: a device for heating victuals, the device comprising a support for the victuals and a heater; a controller; and a vibration sensor configured to detect vibrations, wherein the controller is configured to compare vibrations detected by the vibration sensor to a vibration threshold, and wherein the controller is configured to lower the heater output in response to the vibrations detected by the vibration sensor exceeding the vibration threshold, and, when required for further heating of the victuals, configured to raise the heater output in response to the vibrations detected by the vibration sensor no longer exceeding the vibration threshold.

In examples, the controller may be configured to lower the heater output by de-energising a component of the heater.

In examples, the heater output may be lowered from a first value to a second value, wherein the second value is greater than zero.

In examples, the heater may include at least one of a heating element, a fan, a hot plate, a heating coil, an induction heater.

In examples, when the heater comprises a fan, the controller may be configured to lower the heater output by reducing a fan speed of the fan.

In examples, when the heater comprises a heating element, the controller may be configured to lower the heater output by reducing the temperature of the heating element.

In examples, the vibration threshold may be chosen to minimise smoke incidents.

In examples, a smoke incident may be direct contact between a portion of the victuals and the heater.

In examples, a smoke incident may be direct contact between a portion of the victuals and the support.

In examples, a smoke incident may be caused by victual particles becoming airborne, for example due to vibrations.

In examples, a smoke incident may be caused by spillage or leakage of the victuals.

In examples, the device may be an oven, optionally a convection oven or a steam oven.

In examples, the device may be a liquid heating device.

In examples, the support may be configured to receive an article containing the victuals.

According to a further aspect of the disclosure, there is provided a method for controlling a device for heating victuals comprising: detecting vibrations, via a vibration sensor; comparing the vibrations detected by the vibration sensor to a vibration threshold; controlling, via a controller, a heater of the device to lower the heater output in response to the vibrations detected by the vibration sensor exceeding a vibration threshold; and when required for further heating of the victuals, raising the heater output, via the controller, in response to the vibrations detected by the vibration sensor no longer exceeding the vibration threshold.

In examples, the method may comprise determining a heating sequence for heating the victuals, and adjusting, via the controller, the heating sequence in response to the vibrations detected by the vibration sensor exceeding the vibration threshold.

In examples, adjusting the heating sequence may comprise adjusting the heating time.

### BRIEF DESCRIPTION OF FIGURES

Various examples will now be described, by way of example only, and with reference to the accompanying drawings in which:
Figure 1 shows an oven installed in a galley compartment;
Figure 2 shows a schematic sectional view of a system according to an example of the disclosure;
Figure 3 shows a side cross-sectional view of an oven with a vibration sensor according to an example of the disclosure;
Figure 4 shows a schematic view of a controller including a vibration sensor;
Figure 5 shows a flow chart of a decision tree for a controller.

### DETAILED DESCRIPTION

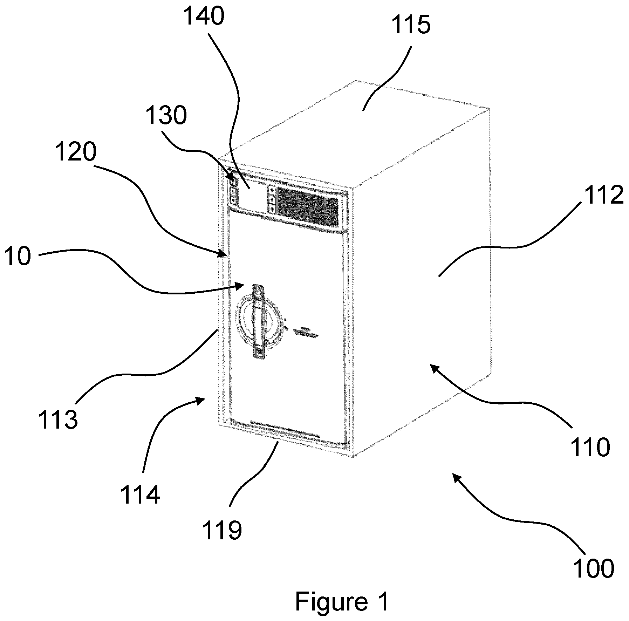

As described herein, there is provided a system comprising a device for heating victuals, a controller and a vibration sensor. In any example of the disclosure, the device may be an oven or a liquid heating device for use in an aircraft galley. The aircraft galley (not shown) may comprise an aircraft galley monument (not shown) in which one or more aircraft galley compartments 100 (as shown in Figure 1 and referred to hereinafter as compartments) may be disposed. In some examples one or more rows of compartments 100 may extend along a side wall (not shown) of the galley. In some examples, the contents of the or each compartment are accessible by a user from the galley.

The compartment 100 comprises a compartment housing 110. The compartment housing 110 defines a compartment chamber 120, in other words a space is provided internally of the housing 110. The compartment housing 110 and the compartment chamber 120 may be cuboid in shape. The compartment housing 110 may comprise at least one panel. The compartment housing 110 may comprise four panels. The first and second panels may comprise side panels 112, 113. In some examples, the side panels 112, 113 are any of parallel, spaced from each other and opposite each other, disposed on opposing sides of the compartment chamber 120 from each other. In some examples and as shown, the third panel is a top panel 115 and the fourth panel is a base panel 119. The top and base panels 115, 119 may be any of parallel to each other, spaced from each other and disposed on opposing sides of the compartment chamber 120 from each other. The top and base panels 115, 119 may be perpendicular to the side panels 112, 113. The side panels 112, 113 may each comprise an inner face which abuts the chamber 120. Each of the top and base panels 115, 119 may each comprise an inner face which abuts the chamber 120. In examples, the configuration of the compartment housing may be different.

In any example of the disclosure, the compartment chamber 120 may receive an appliance 10 (such as a device for heating victuals). In addition or alternatively, in any example of the disclosure, the top panel 115 or another surface of the galley may receive an appliance (not shown), such as a device for heating victuals. The compartment 100 has a first end 114 which is proximal to the user and faces the galley in use, and a second end (not shown) which is distal to the user in use. The first end 114 comprises an opening to the chamber 120. The appliance 10 can be inserted into and removed from the chamber through the opening in the first end 114. The second end (not shown) may be closed, for example by a panel (not shown). In some examples, the shape of the chamber 120 corresponds to the shape of the container 10. In some examples, the shape of the appliance may be smaller than the shape of the chamber in at least one dimension.

The appliance 10 comprises a control panel 130 that a user of the appliance 10 can interact with. Inputs to the control panel 130 by the user are processed by an appliance controller (not shown in Figure 1), the controller being configured to control the appliance 10 in response to the inputs. In some examples, the appliance 10 further comprises a display 140 which provides information about the current state of the appliance 10 to the user, as well as information about the user's inputs.

In any example of the disclosure, the appliance 10 is a device for heating victuals, and may be a device for heating victuals on an aircraft. The term "victuals" is intended to encompass any and all consumable food(s) and / or beverage(s). The appliance 10 is configured to heat the victuals for consumption by aircraft passengers during a flight. Depending on the type of victual the appliance 10 is intended to heat, the configuration of the appliance 10 will vary. In examples, the device for heating victuals may be an oven, and in any example of the disclosure, an oven may be any type of oven including a convection oven or a steam oven. In other examples, the device for heating victuals may be a liquid heating device such as a coffee machine, a kettle, or a hot plate etc. In accordance with the example of Figure 1, the appliance 10 is an oven. An oven provides thermal energy to an enclosed region for the purpose of achieving a specific uniform temperature within the enclosed region that is higher than the ambient temperature outside the enclosed region. An oven is an appliance that is usually utilised for cooking food, however other applications are possible.

In other examples, the oven is not limited to use in an aircraft, but may be for use in other types of vehicle or may be a domestic oven or an industrial oven. An oven can perform any operation requiring the sustained heating of an article. Ovens used in industry often heat articles other than articles of food or drink, such as firing pottery. When used in non-culinary industrial applications, ovens are often referred to as furnaces or kilns. The disclosure of this application can be applied to any suitable device that provides thermal energy to a confined space to increase the temperature to a specific temperature.

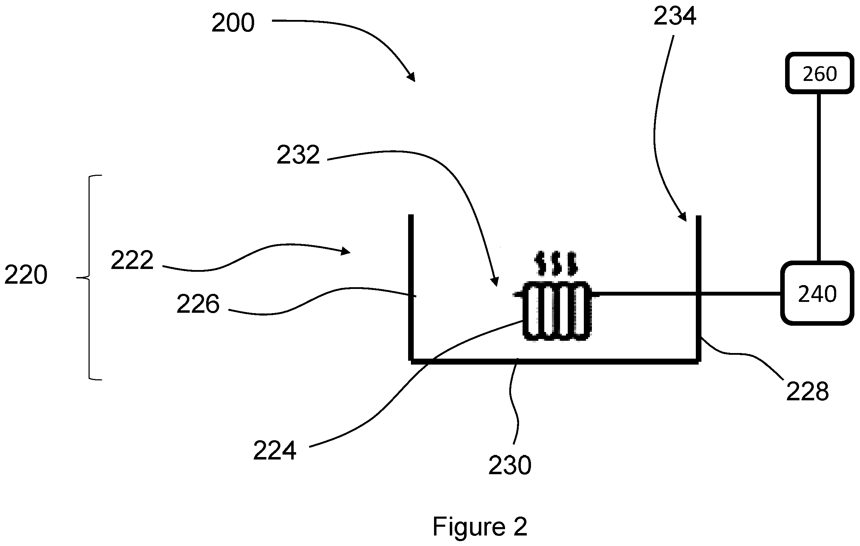

With reference to Figure 2, a schematic view of a system 200 according to an example of the disclosure is shown. The system 200 comprises a device for heating victuals 220, a controller 240, and a vibration sensor 260. The device 220 is an example appliance 10 and can be any of the types of device for heating victuals discussed above. The system 200 is configured to reduce undesirable instances of smoke which may be caused by contact between victuals and hot surfaces. The system 200 (using the vibration sensor 260) detects vibrations that could result in this unwanted contact. The vibration sensor 260 detects vibrations that effect the device 220. The controller 240 is configured to receive signals from the vibration sensor 260 and to control the device 220 in response to the received signals so as to reduce undesirable instances of smoke. In any example of the disclosure, the device is controlled by reducing a heater output of the device when vibrations detected by the vibration sensor exceed a vibration threshold. In any example of the disclosure and as described below, the heater output may include but is not limited to one or both of a fan speed or heat energy. In any example of the disclosure, the heater output may be reduced by reducing the speed of a fan, stopping the fan and / or by reducing the power supplied to a heating element of the device or by stopping or reducing the power supply to the fan and / or the heating element and / or by reducing the temperature of a heating element of the device. In any example of the disclosure, the system 200 may be configured for use in an aircraft. In other examples, other uses are possible such as automobiles, boats, trucks, or caravans. The system 200 can also comprise a domestic device for use in a domestic environment.

The device 220 for heating victuals in the shown example comprises a support 222 and a heater 224. The support is for directly or indirectly containing the victuals. The support 222 may also be known as a container, a vessel, housing, frame, case etc. In any example, the support 222 may comprise a base (such as base 230 of the example of Figure 1). The support 222 may also comprise one or more side walls. In the shown schematic example, the support 222 comprises a first side wall 226, a second side wall 228 and third and fourth side walls (not shown). The first and second side walls 226, 228 are opposed. The third and fourth side walls extend between the first and second side walls 226, 228. The base 230 and the first to fourth side walls 226, 228 define an internal cavity 232, or space, for heating. The victuals are contained in the internal cavity 232 in use. In this example, the support 222 is an open container. An opening 234 is provided to allow for the victuals to be placed within the support 222. In other examples, the opening 234 may be covered by a door or a lid. The victuals may be in direct contact with the support 222 or may be provided within an article, and the article placed within the support 222. The configuration of the support 222 may differ from the shown example. The shape of the support 222 may be any suitable shape. Other example shapes include a bowl, a funnel, a cone, a cuboid. In the shown example, the opening is in the upper section of the support 222. In other examples, the opening may be in a side wall, such as the first and second walls, of the support 222. In Figure 1, for example, a door is shown that covers an opening in the side of the support 222.

The heater 224 is configured to heat the internal cavity 232 of the support 222. The heater 224 is an apparatus that is configured to generate heat energy to raise the temperature within the internal cavity 232 such that the victuals are heated. The heater 224 may comprise a means for heating by converting electrical energy into thermal energy. The means for heating may be a heating element, hot plate, heating coil, or other suitable electrical heating apparatus. In the shown example, the heater 224 is a single unitary apparatus located in the centre of the support 222. In other examples, the heater 224 may not be unitary. The heater 224 may comprise multiple components at different locations within the support 222. The heater 224 may be in an offset location. The heater 224 may be located proximal one of the first or second walls 226, 228. The heater 224 may include any number of heating elements. For example, the heater 224 may advantageously comprise a first heating element proximal the first wall 226, and a second heating element proximal the second wall 228. In examples, the heater 224 may also comprise other components for generating or distributing heat energy to heat the internal cavity 232 of the support 222. The heater 224 may comprise a means for generating airflow. The means for generating airflow may comprise a fan or ventilator. The means for generating airflow may be configured for generating airflow over the heating element. By utilising a heater with multiple heating elements and / or a heater with a means for generating airflow, the heat may be more evenly distributed around the support 222.

The vibration sensor 260 detects vibrations, and may detect vibrations that cause vibrations in the victuals. In examples in which the system is located in an aircraft, the vibrations detected by the vibration sensor 260 may be caused by the movement of the aircraft, the vibration of the aircraft engines, or any other suitable source. Vibrations of the aircraft are particularly common during taxi and take-off and during periods of turbulence. Some of these periods are when the cabin crew are preparing food and beverages, and so it is particularly advantageous to measure and transmit vibration information to the controller 240 during these periods. In examples, the vibrations may be directly associated with the operation of the device 220. In any example, the vibration sensor may be located separately from the device 220 and the controller 240 as in the shown example. Advantageously the separated vibration sensor 260 may be located in any suitable location in the aircraft. This enables space-efficient aircraft design, and also enables the possibility of using a vibration sensor already present in the aircraft. By separating the vibration sensor 260 from the device 220, there may also be less signal noise as vibrations associated with the device 220 or the galley may not need to be filtered out of the detected vibrations.

It will be understood that the vibration sensor 260 may be located in any structure that undergoes vibrations that cause the victuals contained in the support 222 to vibrate, thereby allowing the vibration sensor 260 to detect undesired vibrations and send a signal to the controller 240. The vibration sensor 260 may therefore be connected to or housed in any structure that vibrates in a manner that is transmitted to the device 220.

In other examples, the vibration sensor 260 may be located with, on or within the device 220. When the vibration sensor 260 is located with, on or within the device 220, the system is unitary, and may be housed within one housing. In this example, installation of the system in the compartment is straightforward. Removing the system for maintenance or other operations is then also straightforward. In this example, the vibration sensor 260 may be located with the device 220 in any suitable location. The vibration sensor 260 may be located with the controller 240. The vibration sensor 260 may be located on the support 222. The vibration sensor 260 may be located in the support 222.

The vibration sensor 260 is configured to detect vibrations and convert the detected vibrations into a transmittable signal. The signal is indicative of the detected vibrations. In examples, the vibration sensor 260 may transmit signals indicative of the detected vibrations continuously. The signals contain information about the detected vibrations, such as the amplitude and frequency, that can be interpreted by the controller 240. In other examples, the vibration sensor 260 may transmit a signal indicative of the detected vibrations only at regular intervals. The signals may be any suitable signal transmission, such as an electrical signal, an optical signal, a radio signal etc. In examples not shown, the vibration sensor 260 may be a first vibration sensor 260 of a plurality of vibration sensors. The controller 240 may be configured to receive signals from each of the plurality of vibration sensors.

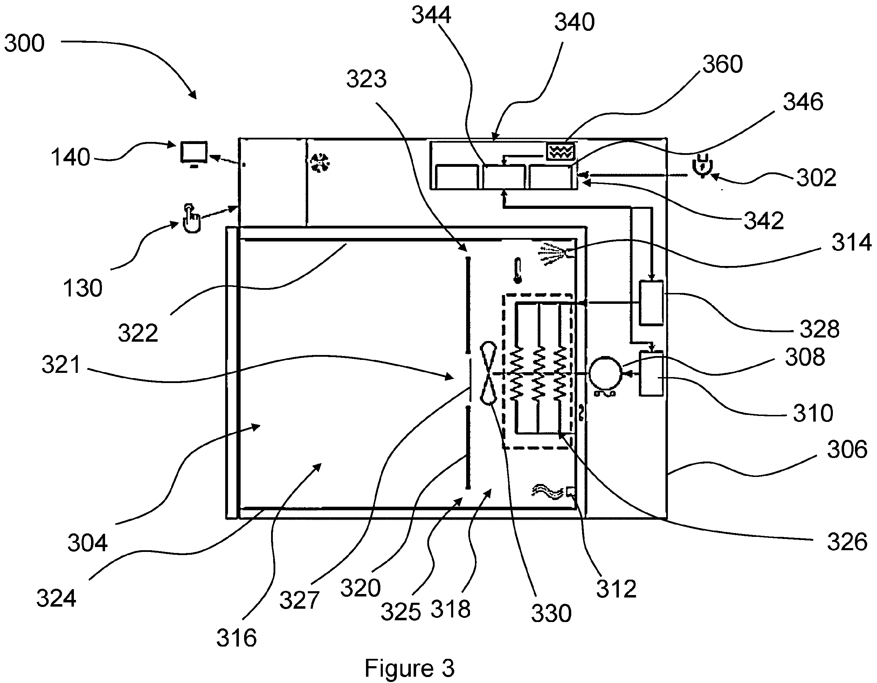

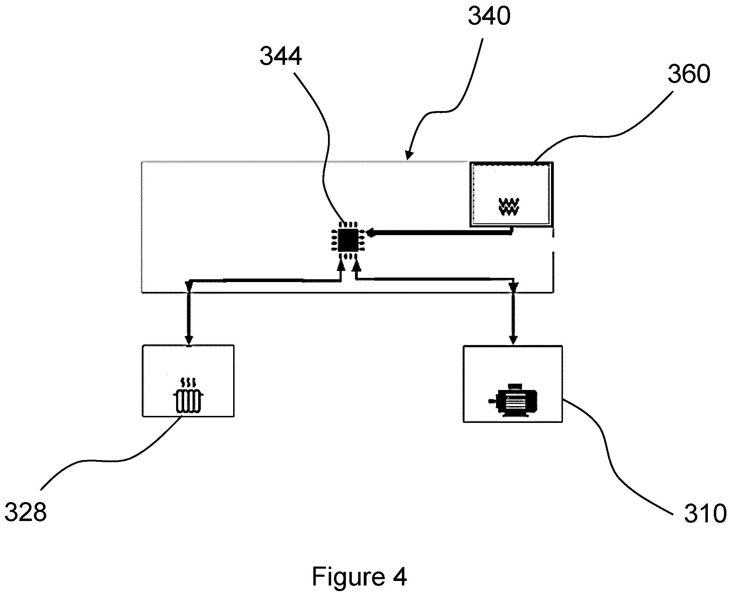

In any example of the disclosure, including the example of Figure 1, with reference to Figures 3 and 4, the oven 300 may be a convection oven or a steam oven for use in an aircraft, herein after referred to as the oven 300. The oven 300 is an example device 220. The oven 300 comprises a housing 306 that houses all of the components of the oven 300. The example oven 300 comprises the display 140 and the control panel 130 as described previously. The oven 300 is configured to receive electrical power from a power supply 302 in the aircraft galley in order to heat victuals within an internal cavity 304 by a heater.

In this example, unlike the example of Figure 2, the controller 340 and the vibration sensor 360 are housed together within the oven 300. The vibration sensor 360 may be located with the controller 340. In the example shown schematically in Figure 4, the controller 340 may be provided on a printed circuit board (PCB), the PCB including one or more, all in the example shown, of: the vibration sensor 360; a heating element controller 328; a motor controller 310 and control electronics 344. In some examples and as shown in Figure 4, the motor controller 310 and control electronics 344 may be separate. In other examples however, the motor controller may be provided together with the control electronics 344 and may consist of electronic hardware and software. The system 200 is contained within the housing 306 of the device 220. The controller 340 may be connected to one or more (each in the example shown) of the display 140, the control panel 130, the power supply 302, the vibration sensor 360, a motor 308 via a motor controller 310, a heating element 326 via a heating element controller 328, a nozzle 312 and a condenser 314. The controller 340 comprises the power supply port 342, control electronics 344, and safety circuits 346. The controller 340 is configured to receive signals from the control panel 130 and the vibration sensor 360. The controller 340 is configured to independently output signals to each of the display 140, the motor 308 via the motor controller 310, the heating element 326 via the heating element controller 328, the nozzle 312 and the condenser 314 in response to the received signals. The controller 340 is configured to adjust the conditions in the internal cavity 304. The controller 340 is configured to reduce smoke incidents by adjusting the heater output. Victual particles, packaging particles or other particles have a higher chance of becoming airborne at higher vibration levels. In examples, the likelihood of particles becoming airborne at a defined airflow-speed may be calculable according to known formulas. These formulas may be used to determine a pre-set criteria that may be pre-programmed into the controller such that the controller may select a heater output according to the pre-set criteria.

The oven 300 comprises a heating compartment. The heating compartment is an example of a support 222 or internal cavity 304. The heating compartment 304 is a chamber that can be heated to a specific temperature. The heating compartment 304 is heated using the heater. The heater comprises a heating element 326 and a fan 330 connected to the motor 308. The heating element 326 provides thermal energy to a localised region within the compartment 304. The temperature in the region proximal the heating element 326 rises rapidly. The thermal energy is transmitted around the heating compartment 304 by convection currents that are generated when the heating element 326 is switched on.

The fan 330 is provided to aid the formation of convection currents for energy transmission. The fan 330 is configured to generate airflow within the heating compartment 304. The fan 330 is located within the heating compartment 304 and is configured to create an airflow across the heating element 326. The fan 330 is configured to generate a force that conveys the colder air proximal the heating element 326 such that colder air is heated. The fan 330 increases the efficiency of heat transmission within the compartment 304. The fan 330 reduces the time required to reach the desired temperature. The fan 330 is powered by the motor 308, for example a brushless DC motor. A requirement of aircraft ovens is high energy efficiency and fast cooking time. Convection ovens and steam ovens are therefore advantageous for aircraft.

The components of the heater are in the heating compartment 304. The heating compartment 304 has a first region 316 for the victuals, and a second region 318 comprising the heater. The first region 316 is separated from the second region 318 by a shield 320. The shield 320 acts as a barrier to prevent access to the heating element 326 and the fan 330. The shield 320 extends over a portion of the height of the compartment 304. The distance between the top of the shield 320 and an upper inner surface 322 of the compartment 304 defines a first gap 323. The distance between the bottom of the shield 320 and a lower inner surface 324 of the compartment 304 defines a second gap 325. The first and second gaps allow air heated by the heating element 326 to move from the second region 318 to the first region 316. The shield 320 comprises an aperture 321 proximal to the fan 330 to allow air to flow into the fan 330. The aperture 321 is advantageously covered by a grate 327 to protect the user from the rotation of the fan 330. The fan motivates air through the aperture from the first region 316 to the second region 318.

The controller 340 is electrically connected to the control panel 130, the display 140, the vibration sensor 360 and the heater such that the controller 340 can interact with these components by, for example, sending and receiving information via electrical signals or directing electrical power to them. The controller 340 is configured to provide electrical power to the heater to heat the compartment 304. The controller 340 is configured to vary the amount of electrical power provided to the heater to vary the heater output. The heater output is the energy delivered to the compartment 304 by the heater. The thermal energy delivered to the compartment 304 per unit time is linked to the heater output. To lower the heater output, the controller 340 provides less electrical energy to the heater.

In advantageous examples, the controller 340 is configured to control the fan motor. The controller 340 is for example configured to reduce the fan speed from a first fan speed to a second fan speed, the second fan speed being less than the first fan speed. The fan speed is measured in revolutions per minute (RPM). The second fan speed has fewer revolutions per minute than the first fan speed. The controller is configured to send a signal to the fan motor to adjust the fan speed. In other examples, the controller 340 is configured to control the electrical energy provided to the fan 330 of the heater such that, for example, when less electrical energy is provided, the motor converts less electrical energy into rotational kinetic energy and the fan 330 speed reduces. The controller may be configured to supply less power to the motor. The controller may be configured to reduce the voltage across the motor. Vibrations transmitted to the victuals within the heating compartment 304 might cause victual particles to move. Due to the high airflow within the oven 300 during operation with the first fan speed, these victual particles may be carried by the high airflow onto hot surfaces, such as an internal surface of the oven 300, the shield or the heating element 326. In the event that vibrations detected by the vibration sensor 360 are determined to exceed the vibration threshold, the controller 340 may be configured to reduce the fan speed of the fan 330. This would advantageously reduce the airflow within the heating compartment 304 and reduce the likelihood of victual particles being blown onto hot surfaces, and so reduce smoke incidents. Lowering the fan speed directly lowers the airflow-speed over the content in the heating compartment, which advantageously reduces the likelihood of picking up victual or other particles by the airflow and transporting these particles to hot components of the heater.

In other examples or in addition to the above example, the controller 340 may be configured control the electrical energy provided to the heating element 326 of the heater such that, for example, when less electrical energy is provided, the heating element 326 converts less electrical energy into thermal energy, and the temperature of the heating element 326 decreases over time. The temperature of the heating compartment 304 would be reduced. The controller 340 is configured to reduce the temperature of the heating element 326 from a first temperature to a second temperature. The controller 340 is configured to lower the temperature of the heating compartment 304 in this manner in response to vibrations detected by the vibration sensor 360 being determined as exceeding the vibration threshold. The victuals may spill or leak in the heating compartment 304 if the vibrations transmitted to the victuals are beyond the threshold. Reducing the temperature of the heating compartment 304 is advantageous because the spilt victuals would not land on hot surfaces.

When the oven is a steam oven, the oven 300 further comprises a humidity adjustment system. The humidity adjustment system comprises a nozzle configured to increase the humidity in the compartment 304 by delivering water vapour to the heating compartment 304. The humidity adjustment system comprises a condenser configured to decrease the humidity in the compartment 304 by removing water vapour from the compartment 304. In examples, the controller 340 is configured to adjust the humidity in the heating compartment 304 in response to vibrations detected by the vibration sensor 360. In other examples, the controller 340 is configured to control the humidity adjustment system and the heating element 326 in conjunction to affect a temperature change in the compartment 304.

In examples, the oven 300 comprises other measurement sensors (not shown) to monitor the environment of the heating compartment 304. In examples, the oven 300 may comprise any of a heat sensor, an airflow sensor and a humidity sensor which are connected to the controller 340. In examples in which further components of a heater are used, a corresponding sensor may be provided in order to enable to controller 340 to accurately adjust all aspects of the oven 300 environment.

In examples, the controller 340 may be configured to adjust each of the heating element 326, fan 330, nozzle and the condenser. The controller 340 may use these components in conjunction to reduce smoke incidents. In examples, the control electronics of the controller 340 control the oven 300 and the safety circuits of the controller 340 monitor the condition of the oven 300 against pre-requisite conditions. The safety circuits are configured to cut the supply of power to the components of the oven 300 and control the display to show an error warning message in the event of a detected fault.

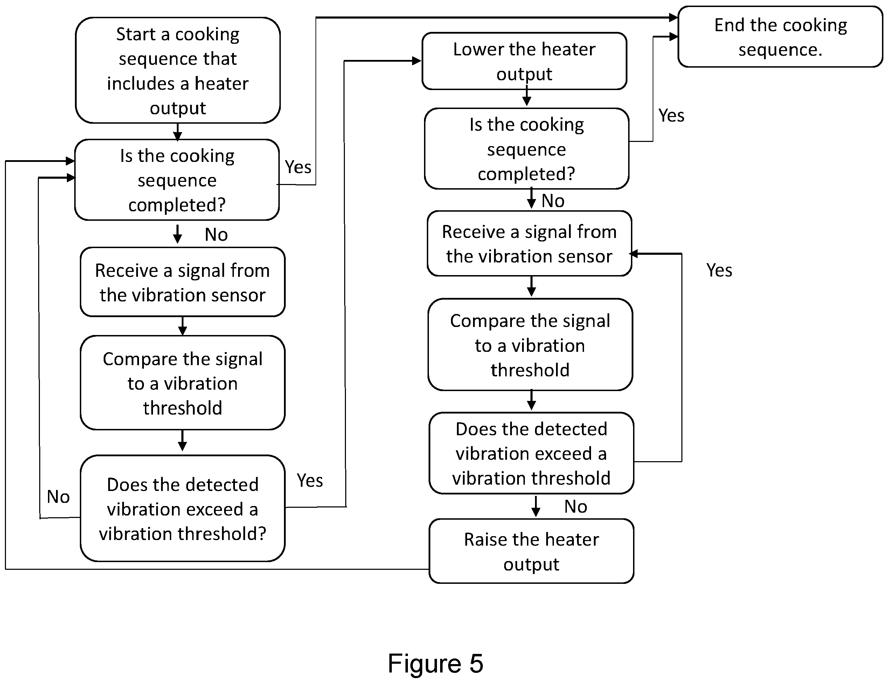

With reference to Figure 5, a method of operating a system of any of the previously described examples will be described. The controller is configured to issue commands to components of the device based on a cooking sequence selected by the user from the control panel. During the cooking sequence, the controller is configured to receive a signal from the vibration sensor and analyse the signal. Once the signal is analysed, the controller is configured to control the device in response to the analysis. The controller is configured to receive signals from the vibration sensor, and analyse these signals, continuously. In other examples, the signals from the vibration sensor may be received and / or analysed at regular intervals. The analysis of the controller is shown in the decision tree of Figure 5.

The controller analysis includes at least comparing the received signal to a vibration threshold. The vibration threshold is a predetermined threshold. The vibration threshold is pre-programmed into the controller. The vibration threshold comprises an amplitude threshold. In examples, the vibration threshold comprises a frequency threshold. This is advantageous as the controller can be configured to control the oven in response to identifying that components of the device or the victuals are at a resonant frequency. In examples, the vibration threshold may be selected from an array of thresholds that are associated with different stages of the flight cycle. In examples, the selected vibration threshold may vary over the period of a flight cycle. In examples, the controller may determine the vibration threshold from a table of vibration thresholds. The controller may be configured to identify an appropriate vibration threshold from the table based on further data from other sensors in the aircraft.

In examples, the vibration threshold is set based on the likelihood of spillage of the victuals. This may be determined by experimentation performed in advance of the installation of the system in the aircraft. The vibration threshold is set in order to minimise or reduce smoke events. A smoke event occurs when victuals come into direct contact with a hot surface of the device for heating the victuals. Direct contact with the hot surface burns the victuals, generating smoke and undesirable gases. The burnt victuals also bind strongly to the surface, which makes cleaning the device after use more difficult.

Once the cooking process has been started, the controller is configured to determine if the detected vibrations exceed the set threshold vibration. If it is determined that the detected vibrations do not exceed the set vibration threshold, the controller does not intervene in the cooking sequence and continues to analyse further signals from the vibration sensor. If it is determined that a signal from the vibration sensor is indicative of vibrations that exceed the set vibration threshold, the controller is configured to intervene in the cooking sequence. The controller lowers the heater output, for example, from a first heater output to a second heater output. The controller determines an amended cooking sequence and issues commands via signals to components of the heater in order to reduce the output of the heater. After this intervention, the controller continues to analyse signals received from the vibration sensor. The controller compares the signals from the vibration sensor to the vibration threshold. If the vibration threshold continues to be exceeded, the controller does not intervene with the cooking sequence. If the controller determines that the vibrations no longer exceed the vibration threshold, the controller intervenes and raises the heater output, for example, from the second heater output to the first heater output. The controller raises the heater output back to the output of the original cooking sequence.

The controller can determine at various stages if the cooking sequence has been completed. In the shown example, the controller determines whether the cooking sequence has been completed before performing analysis on a received signal from the vibration sensor. However, the controller can make such a determination at any point in decision tree.

In examples, the controller is also configured to adjust the time period of the cooking sequence. When the heater output is lowered during a cooking sequence, temporarily or permanently, the cooking time required for the victuals will be increased. The adjustment of the cooking time by the controller is based on at least one of the originally selected cooking sequence, the heater output during the cooking sequence, and the length of time the heater output was lowered. The controller revises the time period for cooking after adjusting the heater output.

In examples, the controller may be configured to adjust the heater output based on how far the detected vibrations exceed the vibration threshold. The vibration threshold may be tiered, such that exceeding the vibration threshold by a narrow margin is considered a low tier event and exceeding the vibration threshold by a large margin is considered a high tier event. The controller in this example is configured to select an adjusted heater output according to the tier. The controller being configured to provide a small adjustment to the heater output in response to detected vibrations of a low tier, and a larger adjustment in response to detected vibrations of a high tier. In examples, the controller is configured to intervene to lower the heater output further if a lower tier event persists for a period of time that exceeds a set time threshold. The controller may also be configured to intervene and reduce the heater output if a large tier event is determined after the controller has already intervened in response to a low tier event.

In advantageous examples, the controller may analyse consecutive signals from the vibration sensor to confirm vibrations before adjusting the heater output. The vibration threshold may further comprise a minimum time requirement. Detected vibrations may need to exceed the vibration amplitude or frequency thresholds for the minimum time requirement before the controller intervenes in the cooking sequence. This is advantageous as the controller only intervenes when it is possible for the actions of the controller to reduce the likelihood of smoke events.

In any example, the disclosure may provide a method for controlling a device for heating victuals. The method may include detecting vibrations, via a vibration sensor; comparing the vibrations detected by the vibration sensor to a vibration threshold; controlling, via a controller, a heater of the device to lower the heater output in response to the vibrations detected by the vibration sensor exceeding a vibration threshold; and when required for further heating of the victuals, raising the heater output, via the controller, in response to the vibrations detected by the vibration sensor no longer exceeding the vibration threshold. In any example, the method can also include determining a heating sequence for heating the victuals, and adjusting, via the controller, the heating sequence in response to the vibrations detected by the vibration sensor exceeding the vibration threshold. In any example, adjusting the heating sequence can include adjusting the heating time. For example, extending the heating or cooking time to allow the same amount of heat to be provided to the victuals as would have been provided had the heater output not been reduced for a period of time in response to the detected vibrations exceeding the vibration threshold.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly the disclosure is not to be seen as limited by the foregoing description, but is only limited by the scope of the appended claims.

## Claims

1. A system comprising:
a device for heating victuals, the device comprising a support for the victuals and a heater;
a controller; and
a vibration sensor configured to detect vibrations,
wherein the controller is configured to compare vibrations detected by the vibration sensor to a vibration threshold, and
wherein the controller is configured to lower the heater output in response to the vibrations detected by the vibration sensor exceeding the vibration threshold, and, when required for further heating of the victuals, configured to raise the heater output in response to the vibrations detected by the vibration sensor no longer exceeding the vibration threshold.

2. The system of claim 1, wherein the controller is configured to lower the heater output by de-energising a component of the heater.

3. The system of claim 1 or 2, wherein the heater output is lowered from a first value to a second value, wherein the second value is greater than zero.

4. The system of any preceding claim, wherein the heater includes at least one of a heating element, a fan, a hot plate, a heating coil, an induction heater.

5. The system of claim 4, wherein when the heater comprises a fan, the controller is configured to lower the heater output by reducing a fan speed of the fan.

6. The system of claim 4 or 5, wherein when the heater comprises a heating element, the controller is configured to lower the heater output by reducing the temperature of the heating element.

7. The system of any preceding claim, wherein the vibration threshold is chosen to minimise smoke incidents.

8. The system of any preceding claim, wherein a smoke incident is direct contact between a portion of the victuals and the heater, and/or
wherein a smoke incident is direct contact between a portion of the victuals and the support.

9. The system of any preceding claim, wherein a smoke incident is caused by victual particles becoming airborne, and/or by spillage or leakage of the victuals.

10. The system of any preceding claim, wherein the device is an oven, optionally a convection oven or a steam oven.

11. The system of any of claims 1 to 9, wherein the device is a liquid heating device.

12. The system of any preceding claim, wherein the support is configured to receive an article containing the victuals.

13. A method for controlling a device for heating victuals comprising:
detecting vibrations, via a vibration sensor;
comparing the vibrations detected by the vibration sensor to a vibration threshold;
controlling, via a controller, a heater of the device to lower the heater output in response to the vibrations detected by the vibration sensor exceeding a vibration threshold; and
when required for further heating of the victuals, raising the heater output, via the controller, in response to the vibrations detected by the vibration sensor no longer exceeding the vibration threshold.

14. The method of claim 13, further comprising determining a heating sequence for heating the victuals, and
adjusting, via the controller, the heating sequence in response to the vibrations detected by the vibration sensor exceeding the vibration threshold.

15. The method of claim 14, wherein adjusting the heating sequence comprises adjusting the heating time.
